# EUROPEAN PATENT APPLICATION

(11) **EP 2 501 146 A2**
(43) Date of publication of application: **19.09.2012**
(21) Application number: 12159935.1
(22) Date of filing: 16.03.2012
(51) Int. Cl.: H04N 21/45, H04N 21/439, H04N 21/435

(54) **Content provision**

(30) Priority: 16.09.2011 US 201113235168; 17.03.2011 GB 201104542; 11.10.2011 GB 201117512; 11.10.2011 GB 201117513; 11.10.2011 GB 201117514
(71) Applicant: Zeebox Limited, London WC2E 9RA (GB)
(72) Inventor: Rose, Anthony, London, London EC4V 3PA (GB)
(74) Representative: Arrowsmith, Peter Michael E.

(57) **Abstract**

An apparatus for displaying live television is described in which live television can be received and output to a user on one or more display devices 702, 704. A user analysis module 808 is configured to acquire data concerning television content being viewed contemporaneously by other users in a network, and the user's set-top-box 700, 800 can output content related to the acquired data to one or more display devices so that it can be viewed by the user. In addition the set-top-box 700, 800 is connected to a server 706 comprising an extractor 708 configured to extract data from the live television. A selection tool 710 is configured to select augmentation content using the extracted data, and the set-top-box 700, 800 is configured to output the selected augmentation content to one or more display devices 702, 704.

## Description

This invention relates to a system and method for the provision of augmented media content.

### Background

TV today is a one-way experience - the signal comes to you; there is no return path. Additionally, the same identical programme goes out to everybody; there is no personalisation.

In this respect the broadcast TV experience is increasingly at odds with the connected world of the internet, where there is the potential for everyone to receive a uniquely personalised experience and - importantly - with a back channel that allows each user to share that experience with others and contribute their thoughts, feedback and input.

Over the years, various enhancements have been made to the basic broadcast TV system in order to provide additional interactive services. For example, in the UK and Europe, so-called Red Button services allow MHEG applications to be distributed via a broadcast stream, allowing interactive applications to be accessed by the user.

However, such applications, whilst providing interactivity such as simple games or links to other services, still lack personalisation (the same application is sent to every user), and they also lack a back channel.

Newer standards such as HBB TV provide additional functionality, but again the concept remains to distribute an identical application to all users who are watching a given TV channel, with that application, or a link to that application, broadcast in a data channel associated with the live TV channel that the user is watching.

An important issue in television relates to the desirability that individual viewers can be targeted with appropriate advertisements. Historically this has been achieved by selecting appropriate advertisements to be interspersed throughout a television program; typically the advertisements are selected to be targeted at the demographic that watch the television program. While this has been effective it has not been technically possible to identify opportunities for advertisements at a higher level of detail. Technical advancements are hampered by the fact that advertising is selected in advance of its display. An object of the invention is to provide an apparatus that can resolve this technical problem in the apparatus to provide a user with content that is directly relevant to live television being displayed.

Another important issue in television relates to the desirability for individual viewers to interact with one another while watching live television. Historically viewers have only been able to discuss live television by telephone or face-to-face. A technical difficulty is how to enable the user to adapt their viewing choices for live television by interacting with their friends and contacts, and it is an object of the invention to resolve this difficulty.

According to an aspect of the invention there is provided an apparatus for displaying live television to a user comprising: a first display device configured to receive and display live television; a second display device; and a user analysis module configured to acquire data concerning television content being viewed contemporaneously by other users in a network, wherein the user analysis module is configured to output content related to the acquired data to the second display device so that it can be viewed by the user.

In this way traditional live television can be augmented with live data concerning the viewing activities of other users in a network. This offers a profound new viewing experience because it can permit a user to adapt their viewing activities according to the activity of their friends or other contacts.

By providing first and second display devices a user may be able to view live television with a single dedicated display device. Augmentation content, including live data concerning the viewing habits of other users, can then be viewed with the second display device. Preferably the second display device can be used as an interactive remote control, and it can be used to display a program guide incorporating the acquired data.

Typically the user analysis module acquires the data from a different source to that of the live television. Specifically the user analysis module may acquire data directly from other users through the internet. Preferably the other users report the television content currently being viewed. In one arrangement users can use their second display device to indicate the television content that is currently being viewed. Thus, the information displayed on the second display device in this arrangement is not directly related to the content of the live television signal.

The apparatus may comprise an electronic program guide (EPG) module configured to order program information using the acquired data so that the ordered program information can be output by the control device. Traditionally EPG modules order program information according to traditional channel numbers. Additionally EPG modules often group program information according to genre. By using the acquired data, concerning the live viewing habits of users in a network, the EPG module may be able to rank programs according to their real-time popularity. In this way a user may choose which channel to watch according to the choices of their friends or other contacts in a network. The EPG module may be provided as part of the user's set-top-box, or alternatively it could be provided remotely on a server.

In another arrangement the EPG module may be configured to rank program information according to the most popular channel selections within a predetermined time period. In this way the EPG can be used to rank channels using a rate-of-change indicator. Thus, a user can quickly see which channels are 'trending' among users in a network so that they can change to that channel, if desired.

A number of other user viewing statistics may be used in the EPG module in order to rank the program information. In just one example, program information may be ranked according to the number of online comments or 'tweets' submitted by users in a network.

The network may comprise one of: all of the users currently watching television, linked users in an online network, a group of users selected by the user. Average viewing habits can vary dramatically, depending on the identities of users in a group. For example, national averages may be quite different to the averages in a narrower group, such as the online network of a teenager. In one embodiment the user analysis module may be configured to acquire data for a selected group of users. By selecting a narrow group the user may be able to adjust their viewing activities according to live viewing statistics in their chosen group. On the other hand the user may prefer to select a broad group of users so that they can monitor the group statistics and adjust their viewing activities accordingly.

The second display device may be configured to display content that is related to the television content being viewed by a specified remote user. In this way the user may be able to monitor the viewing habits of a specified remote user, such as a family member or friend. The two users may permit this type of data sharing so that they can co-ordinate their viewing habits and experience a shared viewing experience, despite their physical separation.

In one embodiment the second display device may be configured to output a snapshot of the content being viewed by the specified remote user. The snapshot of the content may be associated with a visual indication for each user in the network that is viewing the same content. Such a snapshot could be displayed on the main television display or on a companion device.

The first display device may be configured to select a television program to be output according to the television content being used by the specified remote user. In this arrangement the user's television display may be operated as a slave device, where the specified remote user is the master. Thus, the user's television can automatically show the same content as displayed by the specified remote user. This may be desirable so that a user can automatically align their viewing habits with those of the specified remote user.

The apparatus may include a status broadcast module that can be configured to share data concerning the content being viewed by the user. In this way the user can share information concerning their viewing habits with other users in a network. This information may be used by remote users in their own television systems. The status broadcast module preferably includes a privacy option so that a user can conceal information about their viewing habits, if desired. The status broadcast module may be provided conveniently with the user's set-top-box or on a server, as appropriate.

The status broadcast module may be arranged to send messages to users in the network. For example, the user may wish to send other users an invitation so that they can switch to viewing the same television content.

The user analysis module may be configured to monitor the acquired data and to indicate when a predetermined condition has been satisfied. The predetermined condition can be determined by the user according to their preferences.

In one example, the predetermined condition may be a threshold for the percentage of users in a network viewing the same television content. In this example the user may wish to know when more than 50% of users in the network are viewing the same content and the monitoring module may be configured to provide an indication when this condition occurs.

In another example, the predetermined condition may relate to the activities of a specific remote user. In this example the user may wish to know when a particular user begins watching television so that they can coordinate their viewing habits. The user analysis module can provide an indication when this condition occurs.

The user analysis module may be provided locally for the user in a set-top-box. Alternatively the user analysis module could be located in a remote location such as a server.

According to another aspect of the invention there is provided a method of operating a television system, comprising the steps of: receiving live television; displaying the received live television to a user on a first display device; acquiring data concerning television content being viewed contemporaneously by other users in a network; and displaying content that is related to the acquired data on a second display device.

According to another aspect of the invention there is provided a computer readable storage medium having a computer program stored thereon, the computer program comprising: a program module configured to acquire data concerning television content being viewed contemporaneously by users in a network; a program module configured to display live television on a first display device; and a program module configured to display content related to the acquired data on a second display device.

According to another aspect of the invention there is provided an apparatus for displaying live television to a user comprising: a user device comprising a main display device and a channel selector, wherein the main display device is configured to receive live television and display it to the user; and a server device operatively connected to the user device, but remote therefrom, configured to control channel selections for the user device; wherein the channel selector is connected directly to the server device so that the server can control channel selections in response to instructions from the channel selector.

By controlling channel selections from the server it is possible to track a user's choice of channels automatically. In addition, the server can make channel selections according to sophisticated considerations, taking channel control out of the hands of a user. A user can continue to make channel selections locally using their remote control or buttons on their television, but the server offers another possibility for changing the channel in appropriate circumstances.

The channel selector is preferably connected directly to the server so that the server can control channel selections in response to instructions from the user's channel selector. This allows a departure from the traditional approach whereby a remote control can instruct a set-top-box or a television set to change the channel using a local infra-red signal. In the new arrangement the user's channel selector can be connected to the internet and can instruct the server to change the channel directly. This is advantageous because it means that the server can monitor the user's choice of channel in real-time.

Preferably the channel selector can also use a local infra-red signal to instruct a local television set or set-top-box to change channel. This may be desirable when it is not possible to connect the channel selector to the internet.

Preferably the channel selector is a second display device for displaying program information to the user. Preferably still the second display device is a touch-screen companion device that is auxiliary to the main television display. This can permit the user to review possible channel selections and make a selection. Of course, the user's selection can be received directly at the server, which can control the channel selection at the user device.

The server device may comprise a user analysis module configured to acquire data concerning television content being viewed contemporaneously by other users in a network, and wherein the server device is configured to control channel selections for the user device based on the acquired data. In this way the live viewing statistics within a particular network can dictate a user's television channel selections. The live viewing statistics can control television channel selections in a number of different ways. For example, the server may be configured to select a particular channel when a feature of the acquired data exceeds a threshold. This set up can permit the server to change channel when more than a certain percentage of their contacts begin watching a particular channel. In addition, or alternatively, the user may wish their channel to change automatically when a particular channel has started 'trending'. These desirable outcomes can be achieved by setting appropriate thresholds for a feature of the acquired data.

The server device may be configured to control channel selections for the user device so that they follow the channel selections of a specified user in the network. The server can, therefore, control the user device so that it automatically shows the same television channel as another specified user. This can be achieved if the user analysis module acquires data concerning the television channel selections of a specified user. This can enhance the viewing experience for certain users by allowing them to share their viewing experience with another user. This can allow friends or groups to co-ordinate their television viewing, even if they are geographically separated.

According to another aspect of the invention there is provided a method of operating a television system, comprising the steps of: receiving live television at a user device which includes a channel selector; displaying the received live television at the user device; selecting a channel using the channel selector; establishing a direct connection between the channel selector and a server device; controlling channel selections at the user device by sending instructions from the server device which is operatively connected to the user device, but is remote therefrom.

According to another aspect of the invention there is provided a computer readable storage medium having a computer program stored thereon, the computer program comprising: a program module configured to receive live television at a user device which includes a channel selector; a program module configured to display the received live television at the user device; a program module configured to establish a direct connection between the channel selector and a server device; a program module configured to control channel selections at the user device by sending instructions from the server device which is operatively connected to the user device, but is remote therefrom.

According to another aspect of the present invention there is provided an apparatus for displaying live television to a user comprising: a first display device associated with a user and configured to receive and display live television so that the live television can be viewed by a user; a second display device associated with the user; and a remote server communicatively connected to the second display device, wherein the remote server comprises: an extractor configured to extract data from the live television; and a selection tool configured to select augmentation content using the extracted data; wherein the second display device is configured to receive the selected augmentation content from the remote server and display it so that it can be viewed by the user.

In this way a user's experience of live television can be enhanced by appropriate augmentation content. By extracting data from the live television it is possible to select augmentation content that is directly relevant to the live television being displayed. Thus, the television system can provide targeted augmentation content, focused on the content currently being viewed on television.

The data are extracted at the server device at a location that is remote from the user. This is advantageous because the server can perform calculations for a large number of users. In addition, a user can benefit from the extracted information without any specialised local apparatus. The second display device simply needs to receive the selected augmentation content and display it, and this can be achieved without an extractor. This is advantageous because it can facilitate cross-platform compatibility; the user does not need any specialised apparatus and a wide variety of different types of display device can receive augmentation content from the server and display it.

In one arrangement the extracted data may be related to the live television that is being viewed by a user. Thus, a user can view augmentation content that is directly relevant to the live television being displayed. This can allow the television system can provide targeted augmentation content, focused on the content currently being viewed on television.

In another arrangement the extracted data may relate to a live television stream that is unrelated to the live television actually being viewed by the user. In this arrangement the user's choice of channel on the first display device is decoupled from the extracted data. This can allow a user to view the extracted data for one channel when they are actually watching another channel, or they are not watching television at all. This architecture is advantageous as it improves the flexibility with which a user can interact with live television content.

The extractor may be configured to extract words from live television using speech recognition. In this way the extraction can contextualise live television. In a preferred embodiment an entity extractor can analyse the frequency of words in order to identify key words that characterise the live television content. In one example the entity extractor may be able to identify keywords such as "star" and "universe" that appear in a documentary on astronomy. These extracted words can then be used by the selection tool to select augmentation content that is appropriate for these key words. Examples of appropriate augmentation content may include a link to a web page regarding astronomy and a link for purchasing a telescope. Speech recognition can be computationally intensive, and use of the server device is therefore desirable since a server can be provided with significant computational resources; processing by user devices is unlikely to be feasible for computationally intensive operations.

The extractor may be configured to extract text from live television. For example, the extractor may be configured to extract subtitles, electronic program information, or embedded text such as meta-tags. This can add further context to the live television so that appropriate augmentation content can be selected. Text extraction may be infeasible at user devices, especially in HDMI (high definition multimedia interface) systems, where subtitle data is typically embedded in a television picture prior to delivery of the signal. This necessitates data extraction upstream at the server device before the subtitles are embedded in the picture.

The extractor may be configured to extract a feature of the live television, as it changes in time. By extracting a feature of the live television as it changes in time it may be possible to recognise a recurring feature such as an advertisement in live television. The selection tool may be able to use the recognised advertisement to select appropriate augmentation content.

Preferably the apparatus includes a data storage unit configured to store a plurality of augmentation content items. At least one characteristic of a television signal may be associated with each augmentation content item, and the selection tool may be configured to select at least one augmentation item by matching the at least one characteristic with the extracted data. In this way the selection tool can select the augmentation content items having associated characteristics that provide the best match with the data extracted from live television.

Taking one example, the augmentation content may be a list of books that can be displayed on a website, or web-based software, for purchasing books. Each book may be associated with a number of key words. For example, a book about astronomy may have key words such as "star", "telescope", "universe", and "galaxy". The selection tool may be arranged to select the book on astronomy when one or more of these key words match the data extracted by the extractor using subtitles or speech recognition. In this way, the book about astronomy may be selected for display on the website whenever live television is directed to this subject.

In another example, the augmentation content may be a banner advertisement. The data storage unit preferably includes a large number of adverts, each of which could potentially be displayed to a user. In this example each advert preferably includes a number of associated terms or keywords. For example, an advert for a company specialising in eyewear may include keywords such as "spectacles", "eye", "sight", and "glasses". The selection tool is preferably arranged to select the advert when its associated keywords can be matched with keywords in live television extracted by the extractor. In this way the banner advertisement can be served to the user on a website, or embedded in third party software, whenever the relevant keywords are used in live television.

In the examples described above the augmentation content is selected entirely based on keywords extracted from the live television. Of course, the augmentation content can also be selected using information from third party sources or additional factors determined by a server administrator. Thus, the selection of augmentation content need not be based exclusively on live television.

Preferably said at least one characteristic of live television that is associated with augmentation content items in the data storage unit is related to a television clip, and the selection tool is configured to select at least one augmentation item by matching television clips with the extracted data. In this way the selection tool may be able to recognise a particular television clip, such as an advertisement, and to select a pertinent augmentation content item whenever the television clip is played. This may be achieved by recognising a "fingerprint" of the television signal such as a representation of audio and/or video content in the live television signal, as it changes in time. In an alternative arrangement the "fingerprint" may not be easily perceived by the human senses. For example, the selection tool may be able to recognise a particular pattern directly in a digital or analogue television signal. Preferably, the selection tool can compare the extracted data with a number of stored "fingerprints", associated with different augmentation content items. In the event of a match the selection tool can select an appropriate augmentation item for display to the user. The augmentation content item could be a hyperlink that permits the user to purchase the advertised item, or it could be an interactive application that allows the user to provide feedback in response to the advertisement.

The apparatus may include a repetition identification unit configured to identify recurring clips in live television, using the extracted data. In this way the repetition identification unit can identify recurring television clips such as advertisements or station identifiers (also known as "idents"). The repetition identification unit may be arranged to store a "fingerprint" for each recurring segment that is identified.

Once a particular recurring "fingerprint" has been identified it can be used by the apparatus in a number of different ways. For example, the "fingerprint" can easily be linked to an augmentation content item if the administrator wished to associate one with this "fingerprint".

The selection tool may be inhibited from operation whenever the repetition identification unit has identified a recurring segment of live television. This is advantageous because it can prevent recurring television clips from distorting the context that is carefully identified using extracted data. For example, if a user is watching a television program about astronomy it is desirable that augmentation content is targeted for this subject. By disabling the selection tool during recurring features such as advertisements it is possible to avoid the selection of augmentation content that is appropriate to the content of the advertisement.

The augmentation content may be supplied to the second display device from a separate source to the live television. Preferably the augmentation content is supplied over a network such as the internet.

The first display device may receive live television from a satellite. The server device may receive the live television signal directly from the broadcasters, through a ground-based connection. In this way the server device may receive a television signal before the first display device because of satellite delays. This is advantageous because it can allow the extractor to extract data from the live television and select appropriate augmentation content before the user even receives the live television signal. This is a technical advantage because it can reduce delays in the system.

The apparatus may include an integration module for integrating the augmentation content with third party content so that it can be delivered to the user. In this way the apparatus may operate invisibly from the user's perspective. For example, third party content may include a space for advertisements, and advertisements may be added to this space using the integration module.

The remote server may be arranged to receive multiple television signals. Thus, the server can extract data from several live television signals, and provide appropriate augmentation content to selected user devices. Thus, a single server device can support the activities of a large number of users who are interested in the augmentation content for different live television streams.

According to another aspect of the invention there is provided a method of operating a television system, comprising the steps of: receiving live television at a server device; extracting data from the live television at the server device; selecting augmentation content using the extracted data at the server device; sending the selected augmentation content from the server device to a user device; receiving the selected augmentation content at the user device; and displaying the selected augmentation content to a user.

According to another aspect of the invention there is provided a computer readable storage medium having a computer program stored thereon, the computer program comprising: a program module configured to receive live television and output the received live television to one or more display devices so that it can be viewed by a user; a program module configured to extract data from the live television; a program module configured to select augmentation content using the extracted data; and a program module configured to output the selected augmentation content to one or more display devices so that it can be viewed by the user.

According to one more aspect of this invention, there is provided a system for providing a user with access to augmented media content, the system comprising:
means for identifying a media content item that is currently being consumed by a user;
means for analysing the media content item to determine augmentation content that is associated with the media content item, the augmentation content being adapted to augment the media content item; and
means for providing the user with access to the augmentation content while the user is consuming the media content item.

According to another aspect of the invention there is provided, a system, server and method for synchronising interactive web services with live and on-demand TV & radio (i.e. media content).

According to a further aspect of the invention, there is provided a system, server and method for providing media content to a user via first device and further content and/or interactive services to the user via a further (companion) device.

Preferably, the further content and/or interactive services are related to the media content, and preferably the further content and/or interactive services change in dependence on the media content item that the user is currently consuming.

According to a further aspect of the present invention there is provided a system, device and implementation that allows a user to watch television, or listen to radio, whereby:
- information describing the programme being watched or listened to by the user is sent to a server, or set of servers,
- and information (augmentation content) is retrieved from a server or servers that can be used to enhance the viewing or listening experience of the user.

The server may include a set of functionality that allows third party companies to connect their servers to this server, allowing them to make use of the system to send messages, information and commands to users watching live or on-demand TV or radio programmes by means of the system.

The programme being watched by the user may be live broadcast TV, live broadcast radio, or on-demand TV or radio.

The information sent to and retrieved from the server may be sent over the internet, either by means of fixed-line access, wireless access, or mobile phone access.

Preferably, the information sent to the server identifies not only the programme being watched, but also (where allowed by the user's privacy choices), the device on which the programme is being watched and/or information identifying the user who is watching or listening to said programme.

The information retrieved from the server may be created in a way that is personalised to that device and/or that user, based on knowledge that the server, or other servers, has, for example, on the basis of the user's viewing or listening history, preferences, and/or social network connections.

The data retrieved from the server may be used to display data panels, widgets or other graphical elements on top of the video programme being played by the user.

The programme being played may be live broadcast television.

The messaging displayed may be in response to information supplied to the device on which the video is being watched by one or more central servers, connected to the internet.

The messaging that is delivered may be in response to inputs received by one or more servers from servers owned, or operated, by third parties that have made connections to the server(s) for the purpose of targeting messaging to specific devices or users by means of the system.

The data received from the server may be used to launch applications on the device on which the video or audio is being played.

The data received from the server may be used to cause a web browser or equivalent display system to navigate to the Unique Resource Locator (URL) or Unique Resource identifier (URI) of a web page or other document whose location, either locally on said device, or available from a public or privately accessible web server, specified by that server in response to a set of inputs that includes, but is not limited to, the video or audio programme that is being played by that user.

The programme being played by the user may be displayed or listened to on the same device on which the application is to be launched, or the specified web page or document is to be displayed.

The programme being played by the user may be displayed or listened to on a different device to the one on which the application is to be launched, or the specified web page or document is to be displayed.

The information sent to the server may be filtered before being sent to the server based on a set of preferences set on the device from which the data is being sent, by the user.

The data sent to the server may be filtered based on the radio or TV channel being played, such that information about play events from some channels is sent to the server, and information about others is not.

The data sent to the server may be filtered based on the genre of the radio or TV channel being played, such that information about some programme genres or categories is sent to the server, and information about others is not.

The data sent to the server may be filtered based on the fact that certain connections or user "contacts" or "friends" on the watching or listening user's social network are also watching or listening to that programme at that time, such that information about play events is sent to the server only if certain friends are also watching or listened to said programme, or have done so at some point in the past.

The invention extends to a system or a server that provides a platform that connects (third party) services registered with the server or system with users playing TV, video or radio (either live or on demand) on connected devices.

The server receives periodic updates, as input from devices, describing the channel, video or audio being played, the device and/or user ID, the playback time code within the programme (the "combo").

The server maintains a lookup table or database of services, including third-party services, registered against the combo or elements of the combo.

The server returns the relevant services and/or augmented content to the client.

The system provides the facility for PCs, mobile phones or tablets to connect to a web server to obtain information on video, channel and timing of media being played by a given user or device.

The term "receiver/decoder" used herein may connote a receiver for receiving either encoded or non-encoded signals, for example, television and/or radio signals, which may be broadcast, streamed, downloaded or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

It is envisaged that the system as herein described may be implemented wholly on a central server, or a set interconnected servers, which is/are connectable to a plurality of remote client devices. Alternatively, aspects of the system may be implemented, at least in part, on the or each (remote) client / user device.

It is envisaged that aspects of the system, user device, method, and/or user interface described herein may be implemented in software running on a computer such as a personal computer or a receiver/decoder (which may be connected directly to a monitor or to a television or other display means), and it is to be appreciated that inventive aspects may therefore reside in the software running on such devices.

Other aspects of this system, user device and/or method may be implemented in software running on various interconnected servers, and it is to be appreciated that inventive aspects may therefore reside in the software running on such servers.

The invention also extends to a server or a plurality of interconnected servers running software adapted to implement the system or method as herein described.

The invention extends to any novel aspects or features described and/or illustrated herein.

Further features of the invention are characterised by the independent and dependent claims.

The invention extends to methods and/or apparatus substantially as herein described with reference to the accompanying drawings.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

Furthermore, features implemented in hardware may generally be implemented in software, and vice versa. Any reference to software and hardware features herein should be construed accordingly.

These and other aspects of the present invention will become apparent from the following exemplary embodiments that are described with reference to the following figures in which:
Figure 1 shows a schematic diagram of a system for providing augmented media content;
Figure 2 shows a further diagram of the system shown in Figure 1;
Figure 3 shows example inputs to an embedded software module;
Figure 4 shows example outputs of the embedded software module;
Figure 5 shows a schematic diagram of a device ecosystem;
Figure 6 shows an example in which the system provides 'social television' functionality;
Figure 7 shows an example in which the system provides 'Advertising and e-commerce' functionality;
Figure 8 shows an example in which the system provides 'Augmented television' functionality;
Figure 9 shows a schematic diagram of the interaction between the components of the system;
Figure 10 shows a schematic diagram of the server architecture;
Figure 11 shows a schematic diagram of an augmented television system, showing the overall system architecture; and
Figure 12 shows a schematic diagram of an overall system architecture for a television system with enhanced social functionality.

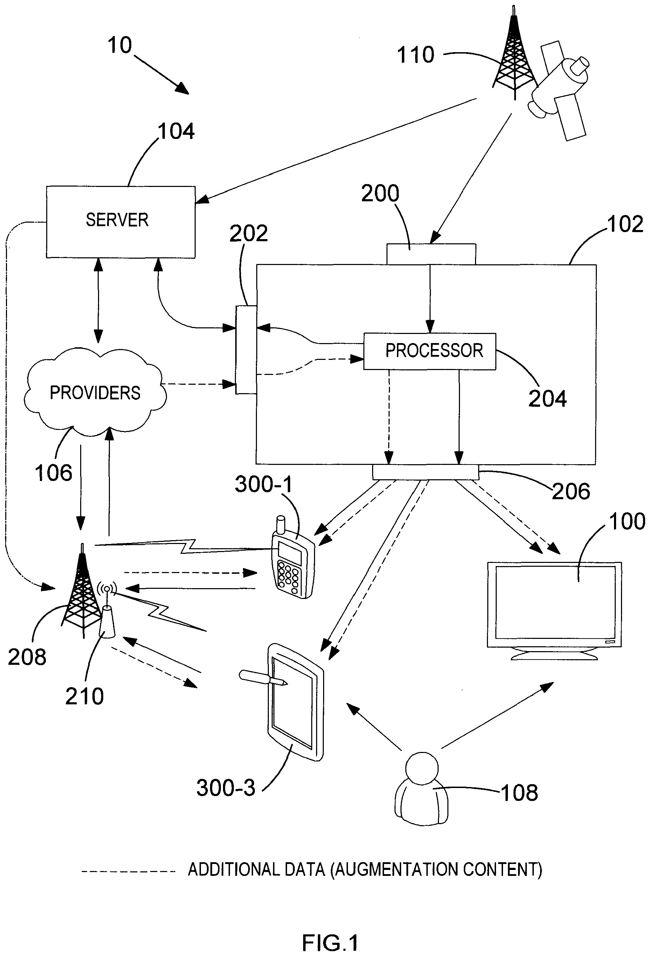

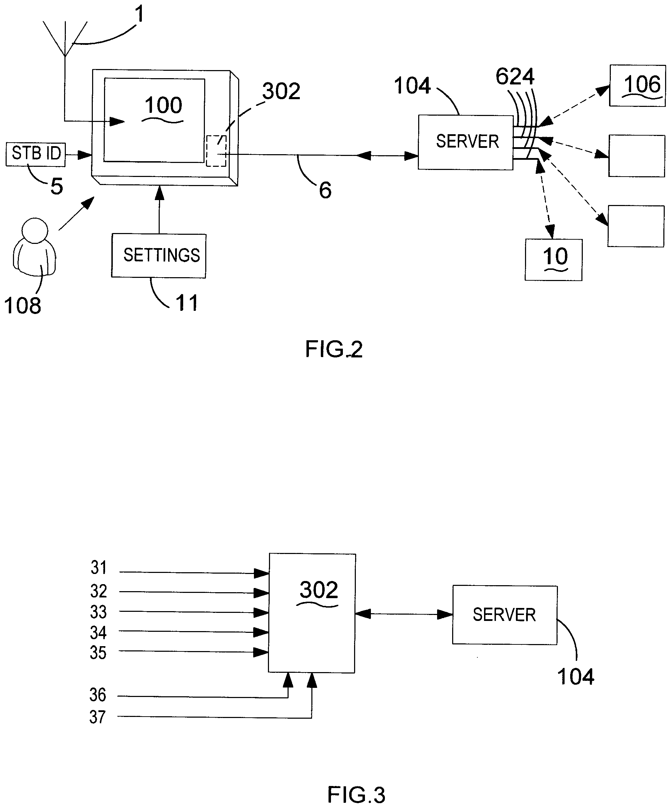

Figure 1 shows a system 10 for providing a user with access to augmented media content. The system 10 comprises, a server, or set of servers 104, a Set-Top-Box (STB) 102 (or a software module 302 (shown in Figure 2) embedded within a TV 100 or other device which is adapted to implement the functionality of the STB 102), and a number of third-party augmentation content providers 106 (one of which is shown). Broadcasters 110, mobile network 208, wireless access point 210 (which communicate with user devices 300-1, 300-3), and a further user device, in the form of a television (TV) 100, are connectable to the system 10.

User devices 300-1, 300-3 may be in the form of mobile phones (smartphones), tablet computing devices, PCs, or other similar such devices. The broadcasters 110 may be for example Digital Terrestrial Television (DTT), cable or satellite broadcasters.

The broadcasters 110 transmit broadcast television or radio content, which is received by a receiving component 200 of the STB 102. This content, or metadata relating to this content, is also received by the server 104.

The STB 102 comprises a processor 204 which passes the broadcast content to the TV 100 via an output component 206. The term TV is used herein to mean either a simple display means, or a display means with further functionality, such as a TV which includes a STB. The processor 204 also sends information relating to the broadcast content currently being consumed (i.e. being viewed) by the user 108 to the server 104 via an Ethernet connection 202, which could be a fixed-line, wi-fi or mobile data connection. The server 104 then identifies the content item currently being consumed using various means described in more detail below. The server 104, or optionally third party providers 106, then determine augmentation (additional) content relevant to the content currently being consumed. The server 104 provides a set of Application Programme Interfaces (APIs) 624 which enable third party operators or providers 106 to access the server 104. The augmentation content is then sent to the STB 102 from the server 104 via the Ethernet connection 202 and/or to the additional 'companion viewing' devices 300-1, 300-3. In the case where the augmentation content is sent to the STB 102, the processor 204 then combines the augmentation content with the conventional broadcast content (e.g. as an overlay) and outputs this augmented media content to the TV 100 via output component 206. The providers 106 may also supply this augmentation content directly to the STB 102 as shown in Figure 1.

The user devices 300-1, 300-3 can receive both the conventional broadcast content, where applicable, and also the additional or augmentation content. Thus, the augmentation content may be displayed on one of the user devices 300-1, 300-3, while the conventional broadcast content is consumed on the TV 100, vice versa, or in combination.

As shown, the augmentation content may be transmitted to the user devices 300-1, 300-3 via the STB 102, in which case the STB 102 includes a Wi-Fi or mobile data transmitter, or fixed-line Ethernet connection. Alternatively, the augmentation content is transmitted to the user devices 300-1, 300-3 via the mobile network 208, or via a fixed-line or wireless internet connection 210.

There is also a back-channel from the user devices 300-1, 300-3 to the providers 106 and the server 104 so that the user 108 can access further additional content and/or interact with the augmentation content, or, for example, change the channel on their TV 100 using their user device 300-1, 300-3. Thus the system 10 enables the user to use their mobile phone 300 to control their TV 100. This back-channel is provided via the STB 102 or directly via, say, the mobile network 208 or wireless internet connection 210

In use, as a user 108 views a television programme via their TV 100 the processor 204 inside the STB 102 sends information relating to this programme to the server 104. The server 104 then identifies the programme and/or device or user, and determines augmentation content relevant to that programme and/or to that device or user 108. This augmentation content is then sent back to the processor 204 which combines it with the content, and outputs augmented media content to the user, for example, by overlaying the augmentation content over the programme as it is being watched on the TV screen. In this way, the user 108 is provided with augmented media content. Alternatively, the augmentation content may be delivered to any of the companion user devices 300-1,300-3 as described above.

Referring to the Figure 2, the system 10 comprises the following elements: Item 100 depicts a means of displaying live and on-demand video and audio (referred to here as a "TV" for short, though it is recognised that the features described herein apply to mobile devices, PCs, TV sets, set top boxes and any other devices capable of rendering video or audio). Devices on which the system is supported will henceforth be referred to below as Supporting Devices and/or where useful for clarity purposes simply as a "TV" for short.

The TV set 100 receives video and audio signals from an aerial 1, from a cable connection, from an internet connection, from a wireless or mobile signal (a TV aerial is shown here by means of example only). The video and audio programmes received may be live, or may be received and played back on-demand, delivered either via the internet or other medium, or played back from local storage such as a local hard disk built into the device 100.

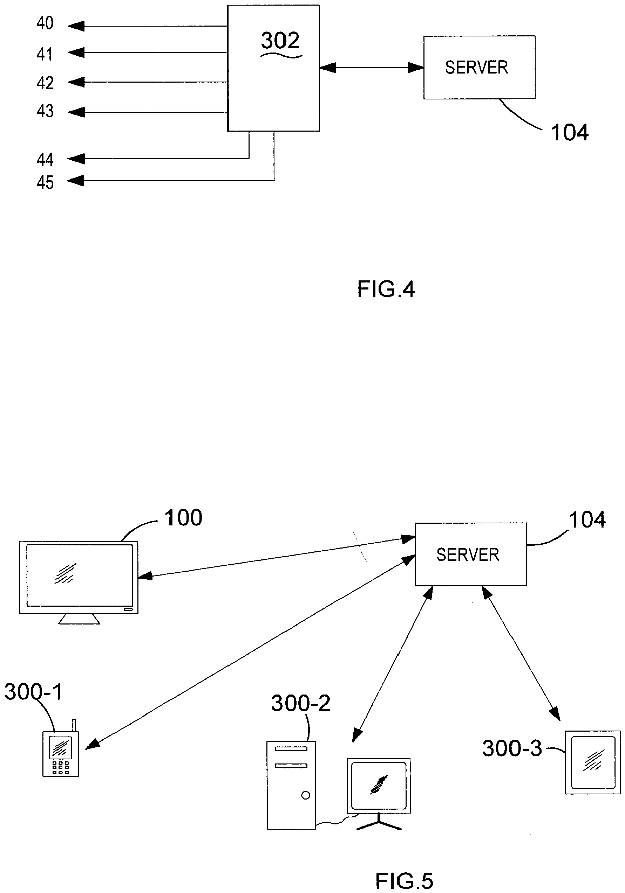

The device 100 contains a software module 302 which will be described in more detail below. The software module 302 takes as input a range of data sources including the programme being played, the name or ID of the user 108 who is watching the programme, the ID 5 of the TV 100 or device 300 (shown in Figures 1 and 4) on which the content is being played, the region in which the user 108 is located, and other information as needed to provide the features of the service. The software module 302 is in communication 6 with one or more servers 104 which provide the backend services that power, in part, the overall proposition. The client-server communication 6 is provided by means of fixed-line internet, a wireless signal, or a mobile signal.

The server 104 may consist of one or more web servers or other data processing equipment, located in one or multiple locations. The server 104 may also consist not just of a single server, but of a group of multiple computers connected together in a peer-to-peer configuration, such that software modules exchange information directly or indirectly with each other, rather than or instead of being mediated by a central server or set of servers.

The server 104 provides a set of application programming interfaces ("APIs") 624 to which third party servers 106, and indeed the system operator's own servers 10, are connectable. By connecting to these APIs 624, the system and third party operators are able to create products and services that can receive communications about what programmes users are watching on user devices that incorporate the software module 302, and are in return able to send data, instructions and communications back to those devices. In this way, augmented media content may be provided to users.

Figure 3 shows diagrammatically the information that can be, wholly or in part, received by the software module 302. The software module 302 is embedded, installed on or made available on a supporting device.

The data source inputs which the software module is able to receive from the supporting device include, but are not limited to:
31 the channel ID or channel number of the live TV or radio programme that isnow playing.
32 in the case of live or on-demand content delivered over broadcast or IP, the programme identifier (referred to henceforth as the Programme ID) of the programme being played, this being optionally in addition to any station or channel identifier information that may be available.
33 an optional identifier ("ID") that allows for identification of the device on which the content is being played.
34 an optional user name or user ID that allows for identification of the user who is watching or listening to the programme on said device.
35 an optional clock signal or time, indicating both the local time on the device on which the content is being played, as well as the time code or play position of the current media playback point. For example, if the user is playing back a given on-demand or live programme, and is 4 minutes 23 seconds into that programme, then that time point may be supplied to the software module in order that it is able to provide services back to the supported device synchronised to that playback time point.
36 the region in which the user and device are located, where "region" may include country, town, suburb or even room within a house, in order that the most appropriate services (right set of friends in that area, services available in that area, etc.) may be provided back to the user.
37 settings or configuration parameters, as configured by the user of the device manufacturer, that help inform the software module of the services that the user is interested in receiving, the user's preferred privacy settings.

The software module receives some set, or subset, of these inputs from the supporting device, as well as - optionally - from other software modules, possibly provided by other third parties, that are running on said device.

Referring now to Figure 4, the software module 302 provides a number of outputs, made available to the supporting device by means of APIs 624 (shown in Figure 2), web services or other means well known in the software industry.

The list of outputs or data feeds or sources made available by the software module include, but are not limited to, the following:
40 zero or more links, typically in the forms of URIs or URLs, that provide a linkage between the content being played and other content that may be relevant to it. For example, while watching episode 2 of a programme, the software module may provide a link to episode 1, allowing the user to click that link (which may be represented on-screen by a button), allowing the user to seamlessly switch from watching episode 2 as a live TV broadcast to episode 1 as an on-demand stream, played back in a media player that may be available (not shown here) on the supporting device.
41 the ID, name or other means of launching a given application that is either already resident on the supported device or which may be invoked, downloaded to, and run on the device, or run remotely.
42 data provided by the server that is forwarded by the software module to other services or applications running on the supported device.
43 commands to control the playback of video or audio on the supported device, including but not limited to commands to switch channel, begin playing a given on-demand programme, stop playing a given programme, shrink the video playback window.
44 commands to control the placement of graphics over, under or alongside video or audio programmes, including but not limited to command to overlay a widget or graphic element on top of the video playback window.
45 commands to control the presentation of windows, menus and other graphics elements on the supported device.

As shown in Figure 5, a feature of the system is its ability to create shared viewing experiences across multiple devices in the home, and between multiple users situated in different geographic locations.

This is achieved by, for example, TV device 100, which contains the embedded software module 302, sending information to the server 104 that tells the server 104 which programme the user is currently watching, how many seconds into the programme the user is, and where applicable the name or ID of the user who is doing the viewing.

The user may then simultaneously be using a mobile phone 300-1, computer 300-2 or tablet device 300-3, which also runs a version of the software module 302 that is also in communication with the server 104.

Since any or all of these devices are in communication with the server 104, and all are relaying to the server the video or audio programme being played on that device (if any), and are receiving from the server a set of data and commands that are relevant to that device, as determined by the device and/or the server, then the cross-communication of information is enabled between devices, allowing for a range of personalised, social and remote control viewing applications.

The above ecosystem may be replicated across thousands or millions of homes, with server 104 able to filter, prioritise and deliver messages from one device to another, in the same home or elsewhere, to create a range of consumer experiences including synchronised viewing amongst frie

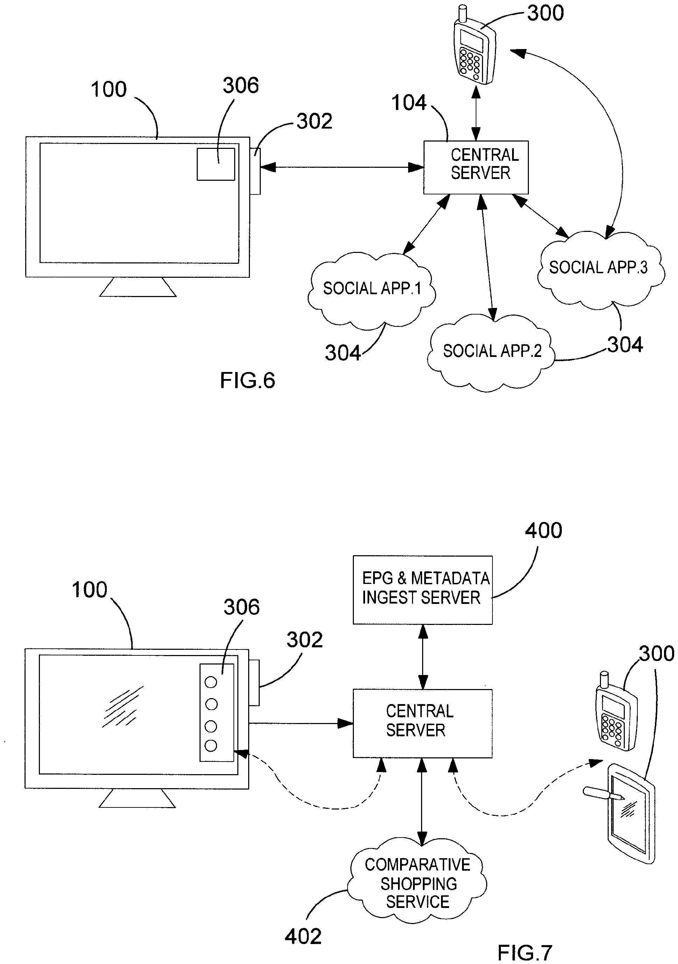

A number of specific examples of functionality that the system is adapted to perform are provided with reference to Figure 6 to 8.

### 1. Social television

In one example, as illustrated in Figure 6, the system 10 is used to provide enhanced social television functionality (companion viewing). For example, when a user tunes to a specific program, he is able to interact actively with other users who are also watching that same program. Alternatively, the user is able to see what certain other users are watching, or what is popular, most highly rated or currently 'trending'. This information could present itself as an overlay 306 on the television screen and/or as information sent to the user's mobile device 300.

In this example, the system 10 comprises a television set 100 which includes the system software module plugin 302, the server 104, a plurality of social apps 304, and a mobile device 300. The television 100 uses the software plugin 302 to send to the server 104 metadata regarding the content currently being viewed. A number of possible social apps 304 access this information (via APIs 624 on the server 104) in order to provide social functionality, such as chatrooms and/or viewing statistics to the television 100 or the mobile device 300. The user can interact and utilise this functionality by back-communicating with the central server 104. It is important to note that as a user changes a channel a particular social app that a user has requested, or which is being pushed to a user, may pop up automatically. For example if a user has requested to watch 'Top Gear' with social functionality, when he turns to a channel playing 'Top Gear', an overlay with live chat with other users in a user's user group may automatically be displayed.

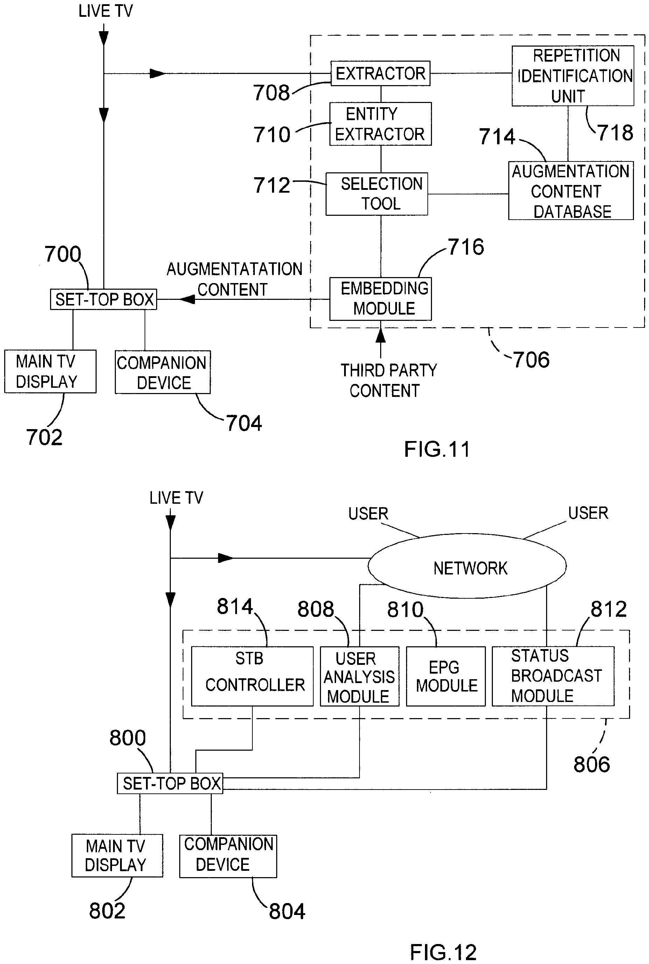

Further details of an apparatus with enhanced social functionality are apparent from Figure 12, which is a schematic view of the features of the overall system. In particular the apparatus includes a set-top-box 800, which acts as a control module, operable to receive a live television signal and augmentation content separately. The set-top-box 800 also controls output signals to a main television display 802 and a companion device 804, such as an iPad (RTM). The set-top-box 800 is arranged to control channel selections for the live television, and it includes an infra-red receiver for receiving signals from a remote control.

The television apparatus includes a server 806 for analysing the content of the live television signal. The server 806 includes a user analysis module 808 that is connected to the internet and is configured to acquire real-time data regarding the television channels being viewed by other users in a network.

The user analysis module 808 is controllable so that it can analyse the viewing habits of a specified number of users. For example, the user analysis module 808 can monitor the current choice of channel for a group of users who are linked by a particular network, such as a social network. In this way the user may be able to monitor live statistics for their contacts' channel selections. The user analysis module 808 can be adjusted so that it acquires statistics for a broad or a narrow group of users, according to system preferences.

The live viewing statistics may be presented to the user in a number of different ways. For instance, a number of thumbnail pictures of users in the network may be displayed on the main television display to indicate which users are currently watching the same channel. In another example a thumbnail picture may appear on the display as an indication that the associated user has just begun watching the same channel. In a yet further example a graph may be displayed on one of the displays to indicate channel popularity against time.

An Electronic Programming Guide (EPG) module 810 is connected to the user analysis module 808 and is arranged to supply electronic program information to the set-top-box 800. The supplied program information is ranked according to real-time popularity within the specified network, using the data acquired by the user analysis module 808. By arranging the program information in this way a user can choose to modify their viewing habits according to the choices of their contacts. In alternative configurations, as discussed above, the EPG module 810 may be arranged to rank program information in order of user ratings, or by highlighting channels that are currently 'trending'.

The EPG module 810 is also configured to analyse the historical channel selections of other users in the network, according to data acquired by the user analysis module 808. In this way the EPG module 810 can include suggestions regarding programs that a user may want to watch, based on the historical choices of their contacts.

The server 806 also includes a status broadcast module 812 that can be configured to share real-time data with the network. Specifically, the status broadcast module 812 can share data in real-time concerning the content being viewed by the user. The status broadcast module 812 also includes a privacy option so that the user can conceal information about their viewing habits. The status broadcast module 812 is arranged to receive an alert from the EPG module 810 whenever one program ends and another begins so that it can be reset to share or conceal information regarding viewing habits, according to user preferences.

The status broadcast module 812 can also be used to communicate with specified users, via the network. For example, the status broadcast module 812 can be arranged to send a 'watch with me' invitation to other users to invite them to watch a particular program. This feature can be used by a user in order to encourage their contacts to switch to a particular channel.

In certain configurations the embodiments the companion device 804 is connected directly to the server 806, bypassing the set-top-box 800. Thus, the companion device 804 can receive content from the user analysis module 808 independently of the channel selection on the main television display 802. This can allow a user to monitor the viewing behaviour of other users, and to interact with them, even if they are not watching television.

As discussed, the set-top-box 800 includes an infra-red receiver so that channel selections can be made in the conventional way, using an infra-red remote control. Additionally the server 806 includes a set-top-box controller 814 that is connected to the set-top-box 800 and can instruct it to change channel. In the arrangement shown in Figure 12, the set-top-box controller 814 is connected to the user analysis module 808 so that it can instruct the set-top-box 800 to change channel when a particular threshold is reached in the viewing statistics. For example, the set-top-box controller 814 could be configured to change the channel automatically when more than 50% of a user's contacts are watching the same channel. This arrangement is advantageous as it allows the server 806 to take control of channel selections according to sophisticated criteria.

In another example the set-top-box controller 814 can be configured to control the channel selections of the set-top-box 800 so that they correspond to the channel selections of another specified user in the network. This can allow a user to link their television to that of a friend or contact so that their television always displays the same contact as their friend's. This may be desirable to synchronise group television watching.

The companion device 804 is generally arranged as a tablet device with a screen so that the user can use it as an interactive remote control. The companion device 804 is connected to the internet and can bypass the set-top-box 800 to communicate directly with the server 804. Thus, when a user selects a particular channel on the companion device 804 the instructions can actually be sent to the set-top-box controller 814 in the server 806, and the channel selections can be controlled from there. This is advantageous as it means that the server 806 is constantly aware of the television channel that the user is viewing.

### 2. Advertising and e-commerce

In this example, shown in Figure 7, the system can operate to provide enhanced advertising and e-commerce functionality. An example of this is when an advertisement is being played on the television; an overlay appears on the screen showing the user several options to buy the featured item. The same or similar information could also be delivered to the user's mobile device.

In this example, the system 10 comprises a television set 100 which incorporates the system software module plugin 302, a central server 104, an EPG and metadata ingest server 400, a comparative shopping service 402, and at least one mobile user device 300. As described above, the television 100, via the software plugin 302, sends information relating to what is being viewed by a user to the central server 104. This could be simply the channel ID, or more detailed information such as audio and/or video data, a programme ID for that programme, typically in the case of on-demand or internet-delivered programmes. In the simplest case, the central server 104 is connected to an EPG & metadata ingest server 400. This contains information on what advertisements (for example) are being aired at certain times on certain channels, or which are appearing right now on a given channel. In a more complex example, the audio and/or video that the user is viewing is identified, then fingerprinted to determine what it is. This could be performed manually by an operator, or automatically by comparing the received data with a database of audio/video data. Once the content has been identified, relevant data/functionality can be overlaid 306 on the television 100, or delivered to a mobile device 300. In this example, the relevant functionality is a list of online shops through which a user could purchase the product being advertised. This is provided by comparative shopping service 402. A further example is live on-screen betting. For example, if a user is watching a football match, live odds for various bets are overlaid on their TV, or other device. The user could then select a bet (by pressing a button on their remote for example) whilst still watching the match.

### 3. Augmented television

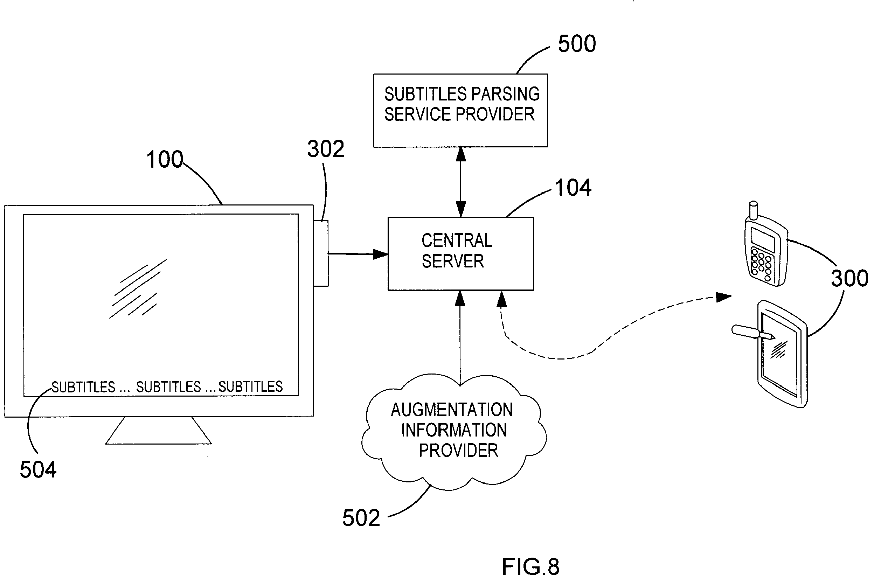

In another example, as illustrated in Figure 8, the system can operates to provide an augmented television service. One example of the system operating in such a way is when information relating to the content on the screen (e.g. information on specific phrases, place names etc.) is pushed to, or made available on, the user's mobile device.

In this example, the system 10 again comprises a television set 100 which incorporates the system software module plugin 302, a central server 104, a subtitles (also known as Closed Captions) parsing service server 500, an augmentation information provider 502 and at least one mobile user device 300. In this example, the television 100 via the software plugin 302, sends information regarding what is being viewed to the central server. Subtitles 504 are retrieved for the viewed content, which could be based on broadcast metadata, or determined directly from the broadcast. The subtitles 504 are passed to a subtitles parsing service server 500 which extracts known phrases, names, or place names and passes this information back to the server 104. The server 104 then searches for these key words through any number of information providers 502 (e.g. Wikipedia) and pushes relevant information to the user's mobile device 300.

Further details of an augmented television apparatus are apparent from Figure 11, which is a schematic view of the features of the overall system. In particular the apparatus includes a set-top-box 700, which acts as a control module, operable to receive a live television signal and augmentation content separately. The set-top-box 700 also controls output signals to a main television display 702 and a companion device 704, such as an iPad (RTM).

The television apparatus includes a server 706 for analysing the content of the live television signal. The server 706 includes an extractor 708 configured to extract data from the live television. Specifically, the extractor 708 is arranged to extract words from live television using subtitles or speech recognition techniques. The extracted words are then analysed by an entity extractor 710 that can determine key-words in a predetermined time period. The entity extractor 710 is configured to dismiss certain common words, and to identify key-words by analysing frequency of use, in comparison to expected averages. Key-words can also be identified by searching for proper nouns such as personal names, and place names.

The server includes a selection tool 712, which may be arranged as a selection algorithm in software, operatively connected to an augmentation content database 714. The augmentation content database 714 includes a plurality of augmentation content items, including advertisements. Each augmentation content item can be selected by the selection tool 712, depending on the key-words that have been identified by the entity extractor 710. This can be achieved by associating each augmentation content item with one or more "buzz-words". An augmentation content item can be selected by the selection tool 712 when one or more of its buzz-words match at least some of the key-words that have been identified. This can allow augmentation content items to be used that are appropriate to the live television content.

The server also includes an embedding module 716 that can embed the selected augmentation content item in a website or other content provided by a third party. In one example, the embedding module 716 may accept an input from a website so that it can insert the selected augmentation content item in a manner that would be invisible to the user. Although the embedding module 716 is depicted as part of the server 706 it would be equally possible to include it in the set-top-box 700.

In the embodiment described above the selection tool 712 can select augmentation content items whenever the key-words identified by the entity extractor 710 match with buzz-words associated with augmentation content items. In another arrangement the selection tool 712 can also be used to select augmentation content items using fingerprinting techniques. In this arrangement, augmentation content items in the database 714 can be associated with particular television clips, such as advertisements. The selection tool 712 can select appropriate augmentation content items whenever a section of live television matches a stored fingerprint. In this way the selection tool 714 can recognise a particular clip in live television, such as an advertisement, and an augmentation content item can be displayed to the user whenever the television clip is played. An appropriate augmentation content item would be a "buy now" button that, upon selection, would direct the user to a website where they can buy the advertised product.

The server 706 also includes a repetition identification unit 718 that can identify recurring clips in live television. Any identified clips can be stored in the database 714 so that they can be assigned to augmentation content items. Recurring clips can also be used, once identified, to briefly disable the entity extractor 710. In this way it is possible to avoid recurring television clips such as advertisements from creating a misleading impression about the overall context of live television.

The set-top-box 700 is configured to output the live television signal and the augmentation content selectively to the main television display 702 and the companion device 704. Preferably the set-top-box 700 outputs the live television signal only to the main television display 702 so that television can be viewed in the traditional manner. The set-top-box 700 can then output the augmentation content only to the companion device 704. In this arrangement the companion device 704 can be used for interacting with the live television, according to the augmentation content that is displayed.

In some embodiments the companion device 704 is connected directly to the server 706, bypassing the set-top-box 700. Thus, the companion device 704 can receive the selected augmentation content independently of the channel selection on the main television display 702. This decoupling is advantageous as it can increase a user's flexibility in reviewing augmentation content. In addition, a user can review the selected augmentation content for television channels, even when they are not watching television.

In one arrangement the companion device 704 is used as an interactive remote control. Thus, the companion device 704 can be used to select the television channel and so that the user can view electronic program information. The augmentation content may be displayed along with the electronic program information. For example, the augmentation content may include links and advertisements that are overlaid on the electronic program information, according to the content that is currently on television, as contextualised by the extractor 708, the entity extractor 710, and the selection tool 712.

Another example of the functionality of the system 10 is the ability to provide 'cross device content play'. This is where a user can switch between devices (for example from their TV to their mobile device) and continue watching the same content in a seamless fashion. One example of where this functionality could be implemented is when a user leaves his house, and is able to continue watching, on a portable device, the content that he was watching on his TV before leaving his house. This feature is afforded as the server 104 is continually being updated with what content the user is currently watching, so the information on partly watched items (for example) can be accessed by the user from any compliant device. For example, an app might be provided that asks a user whether he wants to continue watching a programme that was only partially watched previously, when a user turns on a TV 100, or mobile device 300 for the first time.

Further details relating to the system are now provided.

The system turns the passive TV viewing into an interactive expanded experience which combines lean-back viewing on a TV screen with social networking, group viewing and interactivity, including features for companion phone and tablet devices.

By linking content and advertising with TV programmes, in each supported territory, providing detailed real-time knowledge of what is playing on every channel, it enables a new interactive viewing experience, including the ability to run contextual advertisements against keywords or programmes, either within the main programme or in advertisements, as is described in more detail below.

The platform provides a wide range of social networking and augmented viewing functions, with a particular focus on contextual and paid search opportunities.

Similar to the way that Google indexes the web, the system indexes and provides context to live TV, allowing it to provide a range of free and paid services as described in more detail below.

In particular, the system provides at least the following advantages/features:
● The operation of a video ingest farm that indexes live TV.
● The provision of real-time contextual matches against the TV programme a user is watching, powering a range of augmented TV experiences that draw users to the service on their TV and on companion viewing devices.
● Allowing advertisers to buy paid adwords against phrases, brand names, images and words appearing on live TV or radio.
● The provision of a combination of augmented TV viewing experiences and paid & affiliate click-thrus against what a user is currently watching on TV.
● The provision additional search and content discovery services for live and on demand TV.
● The provision of derivative portal propositions that combines the indexed system programme information database with a user's social graph to provide a new way to consume television.
● The provision for broadcasters, TV content creators and TV advertisers with analytics and search optimisation tools, allowing those parties to tag their programmes and advertisements with preferred keywords, etc.

### Overview

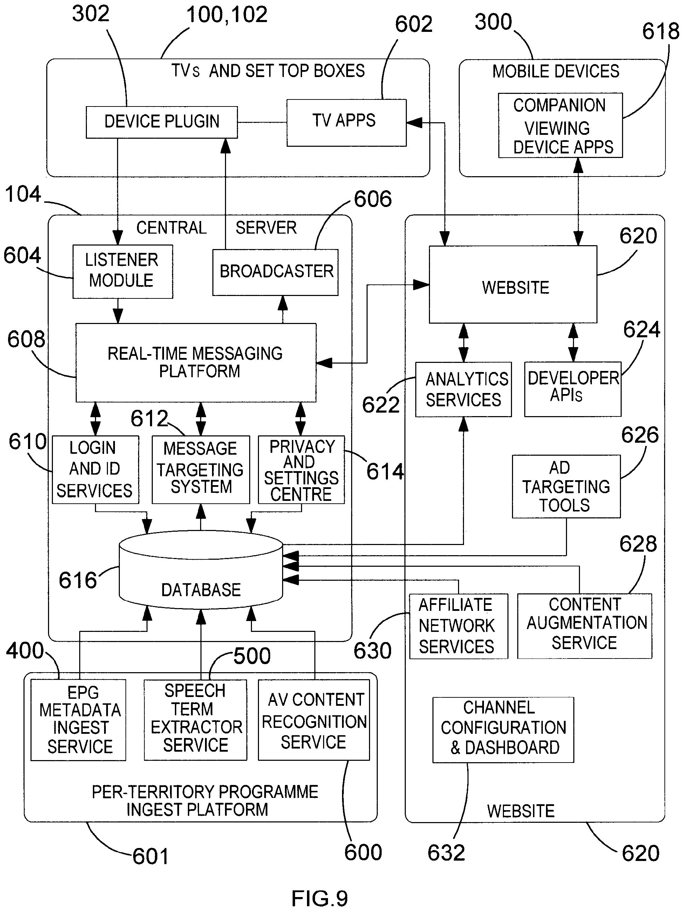

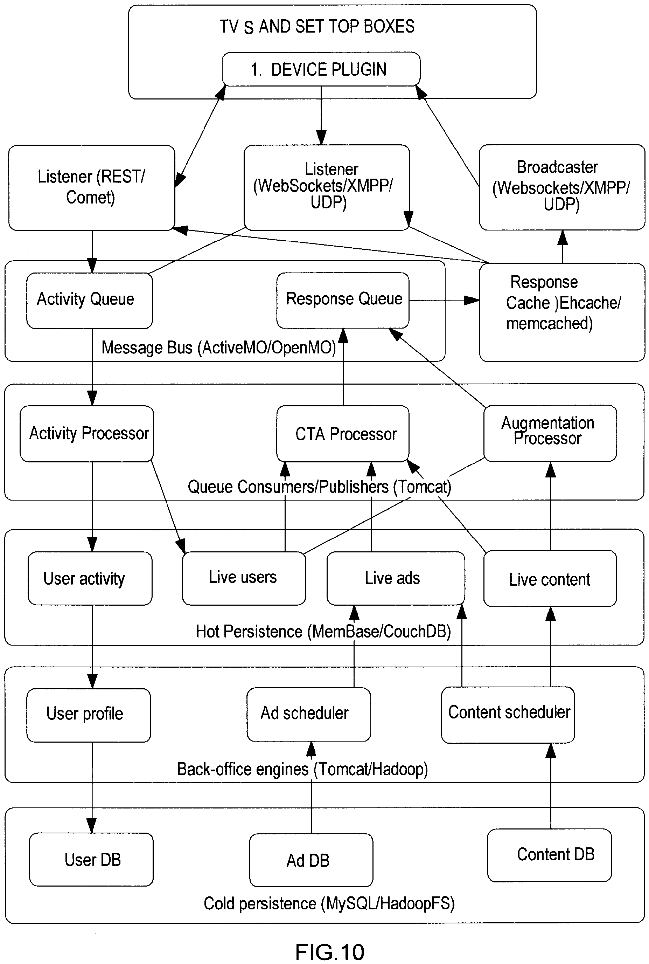

The system consists of the following top-level components described below and illustrated in Figures 9 and 10.

### Device Plugin 302

The Device Plugin or software module 302 is in the form of software, which may be written in Adobe Flash or JavaScript or any other suitable programming language applicable to the device on which it is running, that runs on TV sets 100 (or is included within a set top box 102), sending information about the channel or programme being watched by a given user or device to a Listener module 604 on the server 104, and receiving in response messages and instructions from the Transmitter module / broadcaster 606 that runs on the central server 104. The Device Plugin 302 acts as the bridge between the TV 100 or set top box 102 and the server 104, and is the key enabler that allows the central server 104 and other devices to interact with a TV 100 or set top box 102.

The Device Plugin 302 is added to TVs 100 and set top boxes 102 in cooperation with the device manufacturer, either on new devices, or to existing devices as part of a device software update.

### TV Apps 602

The inclusion of the Device Plugin 302 on a given device allows the central server 104 to communicate with that device - including instructing the device to display overlay windows or messages, referred to as Overlay Panels 306. These overlay panels 306 can appear on top of or alongside the video being displayed, allowing for the display of interactive advertisements, chat windows for viewing parties with friends, augmented programme information, affiliate purchase options, and more.

A set of overlay panel options are provided, including some variants that may deliver only small alert prompts to the user's TV 100, with the full interactive experience delivered to the user's companion viewing device 300, such as their iPhone, iPad, etc.

### Listener module 604

The Listener module 604 is a software component that runs on the system servers 104. It is adapted to receive messages from the Device Plugin 302 modules that are present on TVs 100 and set top boxes 102.

Given the large volume of incoming data, the Listener 604 is adapted to queue, buffer, filter, aggregate and prioritise large numbers of status updates, and then to deliver them to the Messaging Platform 608.

### Broadcaster 606

The Broadcaster 606 is a software component that runs on the system servers 104. Its function is to push messages and commands to the Device Plugin 302 modules running on TVs 100 and set top boxes 102, thereby completing the return path from the central server 104 back to the TV 100.

The Broadcaster 606 maintains an open channel with each TV set 100, allowing it to instantaneously 'push' messages out to any given device or groups of devices. This is achieved by maintaining a connection between the Broadcaster 606 module and each active Device Plugin 302.

### Real-Time Messaging Platform 608

This highly scalable messaging backbone is a key component of the system 10. Its function is to route messages and commands between the database 616 and enabled TVs 100 and set top box devices 102, companion viewing devices 300, and third party web services.

### Login and ID Services 610

This database maintains a list of device IDs for each TV set 100, set top box 102 and companion viewing device 300 that has ever connected to the central server 104, allowing for internal tracking of activity for that device and the targeting of personalised content, including overlay panels 306, to that device. The IDs used are comparable to web browser cookies - in many cases the IDs are simply held in browser cookies, providing users with similar privacy controls such as the ability to block cookies, clear cookies, and so on.

### Message Targeting System 612

This module's function is to select, for each connected user and device, in real time, the optimal messaging or commands to send to that user or device. Such messages may include augmented viewing information relevant to the user or the programme they are watching and the territory in which they are located, or additional content available to them on the device on which content is being viewed. The overlay panel content sent also takes into account the user's privacy and content settings.

In order to perform this function, the Message Targeting System 612 scans the database 616 to find the optimal set of advertisements (as determined by the user's viewing history, user preferences and advertiser targeting), overlay panels 306, further information related to the programme that the user is watching, and friends who are also watching the same programme as the user is watching, right now. The Broadcaster 606 then sends that information to the target enabled device 300.

### Privacy and Settings Centre 614

It is important to ensure that users are in control of any overlay content that they receive, and any information that is collected on their viewing behaviour. For example, users are able to elect to have interactive advertising delivered to a companion viewing device 300 instead of to their TV set 100, opt out of specific augmented TV services, select the type of advertising they wish to see more of, and so on.

The Privacy and Settings Centre 614 is both a database that saves the messaging and data collection settings for each user, along with a user-facing Settings Control Panel, accessible on their TV set 100, companion viewing device 300 or PC that allows them to change these settings as desired.

### Database 616

The Database 616 contains information about the programmes playing now, programmes that played in the past and future programmes, including details of any interstitial advertisements. The Database 616 also contains knowledge of the augmented content available for any given moment in a programme - e.g. the programme web site and affiliate links that may be relevant to a presenter in a travel programme talking about Paris.

The Database 616 contains information about programmes, including the moment-by-moment content of those programmes, relationships between programmes and external links and sites.

The Database 616 does not contain user or device information - this is kept by the Real-Time Messaging Service 608, the function of which is to combine the underlying metadata knowledge from the Database 616 with knowledge of what a given user is watching, their privacy and messaging settings, and then to deliver relevant content to those users and devices.

### EPG Metadata Ingest Service 400

This module serves as the ingest point for programme metadata obtained from third parties. There are third party metadata suppliers who are able to provide programme-level metadata for all TV or radio channels and programmes that might be of interest.

Programme-level metadata typically includes everything that is available in an EPG, including programme title and description, cast and crew information, thumbnail image, and "people who liked this also liked these" recommendation links.

### Keyword Extractor Service 500

While programme-level metadata is useful, for example the system knows that Top Gear is now playing on BBC2 and can provide you with links to other car shows or other Top Gear episodes, this system can go much deeper than that in order to provide an augmented viewing experience.

One way to go deeper is to parse the subtitle or closed caption files that are provided for most programmes broadcast by major broadcasters. The subtitle messages can be ingested in real time from the DTT or DVB digital broadcast stream, and then fed into a simple natural language processing (NLP) system to look for known terms and phrases. Those phrases can then be extracted and passed to the Database 616, and tagged with the time and channel on which they were detected. This information can then be used to drive links to web sites and other augmented viewing applications.

A further enhanced Keyword Extractor Service 500 not only uses subtitle text extracted from the digital stream, but also uses speech-to-text conversion to identify words being spoken.

### AV Content Recognition Service 600

A combination of audio and/or video fingerprinting is used to perform real-time pattern-matching between what is playing on TV or radio right now, and a set of pre-identified digital fingerprints. When the audio or video signature matches a digital fingerprint that the system has on file, additional content associated with that digital fingerprint may be pushed to the primary or companion viewing device, in the form of an interactive overlay panel.

The audio and video fingerprinting requires a set of servers with live video and/or audio capture cards, which record each TV and radio channel that is of interest and fingerprinting the content. Given the limited range of DTT signals, video ingest and fingerprinting operations may be necessary in each supported territory, unless those signals are also available more widely from, for example, DSAT / satellite.

Not all TV channels will require this real-time video capture - certain channels can rely on more granular programme-level EPG metadata only, while other channels - e.g. shopping channels - might provide a data feed from their live broadcasting systems directly to the Database.

### Companion Device Apps 618

Users who choose to have their augmented viewing experience provided to a companion phone or tablet 300, or who have a TV set 100 that cannot support interactive overlays, are able to use a smartphone app, such as an iPhone or iPad app. Such apps then provide purchasing functionality, augmented data, viewing parties with friends, and so on.

### Web Site 620

The linked web site provides a number of consumer and Business to Business (B2B) functions.

For consumers, the web site provides a place where users can...
● learn more about the service,
● register and manage their account from the convenience of a PC rather than trying to use a TV remote control,
● sync their TV or set top box to their PC account using a short PIN code provided on a web site accessible by the user using a PC, mobile or other suitable device on which they can register, log in or enter payment and user details
● manage their privacy and messaging settings,
● download apps for their iPhone, iPad or other supported devices.

For businesses, the web site provides a place where B2B partners can...
● learn more about commercial opportunities,
● sign up and create an affiliate account,
● upload video advertisements and content for automated pre-transmission fingerprinting,
● assign keywords and click-thru URLs to content and advertisements,
● upload their content overlay panels and graphics,
● get advertisement and click-thru performance analytics,
● get access to the developer APIs and associated documentation.

### Analytics Services 622

When users watch programmes on an enabled TV 100 or set top box 102, the plugin 302 sends a constant stream of "now watching" information back to the central server 104, subject to the user's privacy settings. Such data is turned into anonymised and depersonalised form, and made available to third parties on a commercial basis.

Additionally, publicly available data feeds are provided, available through developer APIs, of, for example:
Most Popular - the most viewed programmes by day / channel / genre Now Viewing - what most people are watching at this instant Trending - programmes that are increasing in popularity Being Talked About - what users are connecting and chatting about, right now

These aggregated data feeds can be made available freely on the web site, allowing third-party app developers to make use of this data to create better apps to tap into analytics, creating more engaging experiences. For example, an app exists that shows what the system population is watching right now, and this app is able to control your TV channel selection. A TV that automatically follows the 'wave' of users elsewhere as they switch channels when popular programmes end is produced, or even channel surf during advertisement breaks because the app will tell you when your show starts again.

### Developer APIs 624

Companion viewing applications 618 on iPhone and iPad are commonplace today. But all these existing apps have at least three problems:
a) They do not know what a user is watching on TV.
b) They are unable to control the TV - i.e. if a user selects to watch a programme on an iPad companion viewing app; it is unable to tell the TV to start playing that programme.
c) They are unable to show overlays 306 on the TV screen itself, and without those overlays the information is "out of sight, out of mind". People generally do not keep looking at their phone every few seconds in case there has been any activity since they last checked. You need to see the availability of your friends on your TV, with them "waving" to you to join them to view a programme together. Without friends' activities being shown on your TV, few people will end up using such companion apps, or the social viewing opportunities afforded by them.

Accordingly, the two-way TV connectivity enabled by this system may solve a major set of problems for all companion viewing app developers. Thus, the opening up of this functionality to third parties, via a set of APIs, will service a new industry, centred around the platform.

### Advertisement Targeting Tools 626

As explained above, the system audio and video ingest system performs a real-time fingerprint analysis of major TV channels in a given territory, identifying advertisements as they are being broadcast. The servers 104 determine that a given 30 second segment of video is an advert. This can be determined based on, for example, the fact that the same 30 seconds segment has been detected 12 times so far on that day, across different TV channels - which means that it is likely to be an advertisement.

An operator is presented with a list of previously unclassified but detected advertisement segments and asked to name, tag and identify each detected advertisement.

Advertisers are also able to upload videos of their advertisements directly to the servers for fingerprinting before the advertisement airs on TV, such that it can later be automatically detected without further manual operator intervention. This is analogous to the video fingerprinting tools that YouTube provides, which allow content owners to upload copies of their programmes, allowing YouTube to thereafter automatically identify any infringing copies of those videos uploaded by end users. However, in this case the advertisement publisher is providing advance copies of their advertisements for fingerprinting so that these can later be identified for association with interactive transaction opportunities.

The Advertisement Targeting Tool 626 is thus a portal on the web site, accessible by the system internal operations team and selected B2B customers, that facilitates the assignment of descriptive metadata and IDs to video segments that have been identified by the server as likely to be an advert, but which have so far not yet been identified and tagged.

### Affiliate Network Services 630

Once video segments have been identified, tagged and given an ID as described above, one or two additional things need to be done to monetise those advertisements as interactive transaction opportunities:

### 1. Affiliate click-thru assignment

If a standard affiliate purchase widget is used to allow users to make one-click purchases of a product, the system advertisement assignment operator then does an online search at for example, Amazon, eBay, finds the Product ID for that item on that merchant's site, and assigns that Product ID plus the Affiliate ID to that advertisement segment. The operator then uses the system's Advertisement Targeting Tools in order to achieve this.

Once this has been done, whenever this advertisement appears on TV again, on any TV channel, anywhere, anytime, the central server automatically serves up a default Click To Buy widget, either to the user's TV set or to their mobile phone or table (depending on their privacy and messaging preferences), with the user being taken to the associated click-thru URL if they click to purchase that item.

### 2. Custom Advertisement assignment

Many advertisements will use one of a few default overlays - i.e. a small set of pre-made Click To Buy widgets, assigned by operators to selected advertisements and with click-thrus linked to a small set of affiliate sites, as described above.

Additional, custom advertisement overlays are also possible, and indeed advertisers themselves may wish to upload their own overlays into the system, or use the management console to enter the campaign IDs of their advertisements being served by third party advertisement servers such as DoubleClick, VideoPlaza, etc.

All of the above use cases are enabled via Affiliate Network Services, which is an online portal on the web site where internal operators and approved B2B customers can go to tag advertisements, upload and fingerprint advertisements, assign affiliate click-thrus, upload custom overlays and of course view and download click-thru analytics for their advertisements.

### Content Augmentation Service 628

The system is not just contextual advertising and Click to Buy - it is about an augmented TV viewing experience. That means not only enabling a user to chat with their friends while they watch, but getting a delivering feed of interesting links and information to the user.

For example, as the presenter of the travel show a user is watching begins talking about Phuket, the user's iPad would simultaneously show information on Phuket, the population size, and how to get there. Or, while a user is watching a music video channel, as the presenter talks about a new artist, that artist's Facebook page and Tweets appear on the user's iPhone.

In order for this to happen, the information that is extracted from a programme is associated in real time - using the subtitle extractor system, for example - and linked to terms and phrases provided third party information sources. There are far too many keywords and terms to try to do these associations manually, but it is possible to cross-link incoming phrases with a known taxonomy and then use that taxonomy to provide links to a range of relevant external sites.

The Content Augmentation Service 628 matches the terms extracted from incoming subtitle term extraction, across all scanned TV channels, looks for a match with a known category entry and, where a match occurs, updates the Content Augmentation feed for that channel. Those feeds can then be used by the system or third-party apps to create augmented user experiences, all hubbed around and dependent on the system platform.

### Channel Configuration & Dashboard 632

The system has the ability to offer different overlay experiences for each TV channel in a given territory, and for different territories.

For example, selected channel owners or broadcasters may have different requirements to allow them to control the content overlays that appear over their channels. Alternatively, the system may be configured so that certain classes of overlays should or should not be shown over selected channels - e.g. where certain types of advertising is restricted from appearing over some channels, but those advertisements over other channels are allowed.

The Channel Configuration service 632 - a portal on the web site - makes this possible. This web portal allows a system operator to set the overlay targeting configuration on a per-channel basis, ensuring that the system always complies with any legal or contractual obligations that apply to any given TV channel or broadcaster.

Additionally, a "Dashboard" function allows system operators and/or registered users from approved channel owners or broadcasters to log in to view analytics for their channel, including number of served overlays, number of users, viewing by time of day, most viewed programmes, engagement time per viewing session, and a range of additional information that is of value to the channel owner.

As shown in Figure 2, a key feature of the system is not just the ability to use the server 104 to act as a switch to route data and communications between multiple supported devices, but also to provide on server 104 a set of application programmer interfaces ("APIs") 624 which can be made available to third parties, allowing third party companies to develop an open-ended set of products and services that tap into the set of data being communicated between supported devices, and to use the logic and computation systems provided on server 104 to target messages to specific users, or all users watching a specific programme, for example.

Examples of the APIs 624 that may be provided include, but are not limited to, the following:

| API name | Takes as input | Returns as output | Description |
|---|---|---|---|
| **Get_now_playing** | STB ID or User ID | Programme ID | Returns the ID of the programme or channel being watched by a user or being played back on a given supported device |
| **Jump_to_channel** | STB ID | Channel ID | Causes the supported device with the specified ID to switch to a TV or radio channel with the given ID and begin playing that channel |
| **Play_programme** | STB ID | Programme ID | Causes the supported device with the specified ID to begin playing the specified audio or video programme |
| **Launch_widget** | STB ID | Widget ID, URI or URL | Causes the user interface on the supported device with the specified ID to launch an application or widget with the specified ID |
| **Send_message** | STB ID | Target, Message text | Causes the server to send the specified message (which may be a user-readable message such as "Hello", or a machine-readable instruction) to the supported device with the specified ID, and then to cause the software module on that device to direct the message to the specified target application running on that device. |
| **Key_press** | STB ID or User ID | Remote control or keyboard key ID | Sends to a third-party application the remote control or keyboard key pressed by a user on the supported device. |
| **Listen** | STB ID or User ID or third-party ID | | Causes all future messages from a given device, subject to the privacy and other filtering rules in force at the time, to be routed to the third-party service that has requested to listen to the data stream from said supported device. This API may also be used to allow third party applications and services to communicate with each other, creating a complex messaging framework around supported devices and third parties |
| **Stop_listening** | STB ID or User ID | | Causes the server to stop sending messages from a given supported device to a given third party service that has previously issued a listen command |
| **Authenticate** | STB ID or User ID + third party ID + userID on third party service + password | Success flag | Before a third party is able to listen to data from a given supported device, or send commands or data to that device, it may need to first authenticate itself with that device for security and privacy purposes. This is achieved by sending the supported device a set of credentials which may be accepted, or not, by the supported device, including causing a message to be displayed to the user on the supported device asking them to allow or deny access by said third party service or provider. |

Any system that provides third parties with potential access to data about programmes that a user has watched, or which allows remote devices to issue commands to a user's TV set, clearly carries with it a range of privacy and security responsibilities.

Accordingly, and as shown in Figure 2, the system includes a range of configurations and settings that allow the user 108 to control what information is transmitted from their supported device 100 to the server (not shown). This is achieved by providing the user with a set of settings options 11, which may be accessed via a setup screen or menu, or via some other means.

Settings options that may be provided to the user include, but are not limited to, the following:

| Setting | Options | Description |
|---|---|---|
| **Share_my_viewi ng** | All / Selected_O nly / Off | Tells the software module to share information on programmes the user is watching or listening to with everyone, or selected friends or contacts only, or not at all. |
| **Sharing_buddies** | <list of usernames > | List of zero or more friends or contacts that the user has selected to share their viewing or listening with. |
| **Do_not_disturb** | On / Off | Tells the software module to send incoming messages on to destination applications, display incoming messages, or not |
| **Solo_mode** | On / Off | Tells the software module and other parts of the user interface that the user is watching TV in solo mode - i.e. as a traditional old-style TV set - vs. in Shared or Social mode, where the user interface may be infused with recommendations from friends, the user can see what their friends are watching now, etc. |

| | | |
|---|---|---|
| **Select_profile** | Username or Default | Allows multiple users of the same device to have profiles for themselves |
| **Clear_history** | --- | Causes the user's viewing or listening history on the device and/or server to be erased. |

These and additional settings and preferences may be configured and/or applied at either the client, or any participating client devices for a given user, or on the server, allowing server-side rules to be applied based on these and other user preferences.

### Transmitters and Receivers

The software module is provided in a number of variants, in source code and/or compiled for a variety of device types and platforms, for incorporation into a wide variety of devices.

Some devices will be small low-powered devices, such as remote controls, which may act as controllers or remote interfaces for other devices on which the video or audio is being played. Similarly, some devices may be primarily audio or video players, where primary purpose is to send media playback and timing information to the server, where it may be synchronised and shared with remote control devices, etc.

Additionally, some playback devices may have the sophistication to both transmit playback information to the server only, while others may be able to both transmit information on the media being played as well as to receive commands or data from the server and execute those commands and/or display that data. For example, in a use case where the software module is incorporated into an existing TV or set top box product that lacks a browser or widget overlay system, the device may lack the ability to display overlay widgets or launch applications. In this case the software module may be employed to transmit media playback information to the server only, and not attempt to receive commands and data back from the server.

Conversely, for newer-model devices which incorporate a browser or widget display system, the device may both transmit media playback information to the server and receive in return commands to launch local applications.

Note that in all cases the same or substantially the same software module may be deployed on all device types, compiled for that device's operating system and runtime environment, but with the device making use of only those APIs provided by the software module as are relevant to that device.

To allow for a more convenient description of the different use cases, and different functionality expressed by the software module in different devices, the functionality is split into one of two general types: (i) Transmitters, and (ii) Receivers. These terms are for descriptive purposes only and any given software module implementation in a given device may incorporate either or both classes of functionality.

### Transmitters

"Transmitters", or "transmitter functionality" are those classes of devices, services or functionality, or that part of an implementation, focussed on transmitting from a given supported device to the server information about a programme being played by a given user, either as live broadcast radio or TV, or as an an-demand programme.

For example, if a user is watching, say Channel 1 broadcast TV, then the Transmitter includes the following aspects,
- A software module included in that TV set
- The integration of that software module into the TV or other receiving device such that the device communicates to the software module information about the channel or programme now being played
- The ability to send that information, along with ancillary information such as the identity of the user currently watching said programme, to the server.

### Receivers

"Receivers" or "receiver functionality" includes devices, services and functionality that provide the features such that a given device may receive information from the server or from the local software module or other local interfaces about content that is being watched or listened to by a given user on either that device or on another device.

For example, a mobile phone, running the software module described above, may implement Receiver functionality so that, when a user is watching Channel 1, say, on a TV set which implements Transmitter functionality, then information about the programme being watched is sent to the server, and thence, with filtering, embellishing or other information added or removed by the server, to the Receiver part of the software module running on said mobile phone, thereby allowing the mobile phone to 'know' what the user is watching on the TV, and to display, for example, a list of friends of that user who are watching the same programme, or who have previously watched that programme.

Another example would be where the Receiver functionality is implemented on the same device that is running the Transmitter functionality, such that for example a user may see displayed on their TV set, overlaid on the video that is being played, a list of their friends who are watching this programme right now (said overlay displayed being facilitated by the Receiver part of the software module and environs), where knowledge of the programme being viewed by that user, and hence knowledge of which of their friends are also watching it, is enabled by the Transmitter described above, that Transmitter being in this example executed on the same software module running on the same device as the Receiver module.

### Key hardware features

In one example, the system includes a set top box (STB), in other examples; the functionality might be built into a TV set and/or implemented in software. The STB includes, in this example, at least some of the following features / functionality:
● one T2 HD tuner (for European markets)
● Wi-Fi is optional
● with HBB, an HTML browser and W3C widgets
● content protection, including SSL streaming and (to be confirmed) Marlin DRM
● a remote control that can control both this STB and the TV that it's connected to

### HBB+ hardware requirements

An HBB+ compliant box has the following minimum hardware specs:
For the Hybrid box both RAM and Flash are increased. For certain territories (including the United Kingdom) the frontend section is modified to accommodate a DVB-T2 tuner and demod.

After proper verifications, there is no need for a redesign since the T2 components are pin-to-pin compatible with the current DVB-T equivalents.

HW already supports DVB-CI. CI+ can also be supported.

Looking at the functionality that a user will encounter when using the system, the following aspects/features are provided by the following parts of the system.

### The content provider provides:

- their own portal site, built using HTML & JavaScript (which may be encoded
- the content providers portal site links to and launches an embedded media player when the user clicks Play
- supplying content metadata to the system for use in global search and discovery
- interactive apps that they may wish to overlay on their videos,
- or, in the case of broadcasters, any apps that they may want to have launched over their live channels

### The system operator provides:

- a central content discovery UI, known as the mall
- any other key Ul content discovery elements, including an EPG
- the design, build and operation of the servers that power the mall's search and discovery functions
- ingest of metadata from content providers
- the design, build and operation of the central server platform
- the design, build and operation of the system connector module that goes into each STB
- supply of specs (HBB+, etc.) to STB manufacturers to build their part of the proposition

### Individual STB manufacturers provide:

- their products from hardware level up to browser level
- all the DVB / DTT components and functionality
- compliance with the HBB+ specs described herein
- incorporation of the system connector into their software, and hooking it 15 up to the required APIs
- all the Settings and Setup screens, and any other device-specific screens
- any PVR, DLNA or other functionality that falls outside the system mall
- their own app store, if relevant
- licensing and providing the required content protection / DRM functionality 20

### Software architecture

The top level software architecture includes:
a) A Media Player capable of playing back many different codecs and formats. This includes the capability of descrambling and playing back SSL-protected streams (coming from iPlayer for example) at speeds up to and exceeding 3mbps.
b) A DVB stack capable of reproducing both SD and HD channels, satisfying various local regulations (e.g. UK-Style LCN, Italian-style LCN and so on).
c) DLNA 1.5 Server and Renderer.
d) RDP protocol. As an option, the SW offers the possibility to use the UI from remote (e.g. on a mobile phone or on a PC) using the VNC protocol.
e) Local navigator UI based on QT.
f) Opera or Access browser. This is preferably Opera 10.60 QT version. Supporting download and installation of W3C-style widgets. The box has UI functionality for accessing installed widgets and the application store.
g) The software is modified to achieve HBBTV+ status where HBBTV and Widgets coexist in a seamless environment. The CE-HTML JavaScript APIs mandated by HBBTV (e.g. those needed to interact with the DVB stream) are exposed to the whole browser environment, including widgets.

In particular the HBBTV stack is modified in such a way that the signalling of applications contextual to the DVB channel currently being played happens via 'polling' to an internet server instead of via DVB.

This web service is invoked any time the user changes channel and at regular (small) intervals during viewing.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. An apparatus for displaying live television to a user comprising:
a user device comprising a main display device and a channel selector, wherein the main display device is configured to receive live television and display it to the user; and
a server device operatively connected to the user device, but remote therefrom, configured to control channel selections for the user device;
wherein the channel selector is connected directly to the server device so that the server can control channel selections in response to instructions from the channel selector.

2. An apparatus according to claim 1 wherein the channel selector is a second display device for displaying program information to the user.

3. An apparatus according to claim 1 or claim 2 wherein the server device comprises a user analysis module configured to acquire data concerning television content being viewed contemporaneously by other users in a network, and wherein the server device is configured to control channel selections for the user device based on the acquired data.

4. An apparatus according to claim 3 wherein the server device is configured to select a particular channel when a feature of the acquired data exceeds a threshold.

5. An apparatus according to claim 3 or claim 4 wherein the server device is configured to control channel selections for the user device so that they follow the channel selections of a specified user in the network.

6. An apparatus according to any of the preceding claims wherein the main display device includes a receiver and the channel selector includes a complementary emitter so that the channel selector can control the channel selections of the main display device.

7. An apparatus according to any of the preceding claims further comprising a second channel selector, wherein the first channel selector is connected directly to the server device so that the server can control channel selections in response to instructions from the first channel selector, and wherein the second channel selector includes an emitter that can communicate with a receiver in the main display to control its channel selections.

8. A method of operating a television system, comprising the steps of:
receiving live television at a user device which includes a channel selector;
displaying the received live television at the user device;
selecting a channel using the channel selector;
establishing a direct connection between the channel selector and a server device;
controlling channel selections at the user device by sending instructions from the server device which is operatively connected to the user device, but is remote therefrom.

9. A computer readable storage medium having a computer program stored thereon, the computer program comprising:
a program module configured to receive live television at a user device which includes a channel selector;
a program module configured to display the received live television at the user device;
a program module configured to establish a direct connection between the channel selector and a server device;
a program module configured to control channel selections at the user device by sending instructions from the server device which is operatively connected to the user device, but is remote therefrom.
